# EUROPÄISCHE PATENTSCHRIFT

(11) **EP 2 072 882 B1**
(45) Veröffentlichungstag und Bekanntmachung des Hinweises auf die Patenterteilung: **28.03.2012**
(21) Anmeldenummer: 08169900.1
(22) Anmeldetag: 25.11.2008
(51) Int. Cl.: F16L 59/10, F16L 59/02, F16L 59/14

(54) **Isolierschlauch**
Isolating sleeve
Manche d'isolation

(30) Priorität: 20.12.2007 DE 202007017809 U
(43) Veröffentlichungstag der Anmeldung: 24.06.2009
(73) Patentinhaber: VÖWA GmbH, 86399 Bobingen (DE)
(72) Erfinder: Vöst, Robert, 86399, Bobingen (DE)
(74) Vertreter: Charrier, Rapp & Liebau

(56) Entgegenhaltungen:
- DE-A1-102004 041 305
- DE-C1- 10 104 046
- FR-A- 564 145

## Beschreibung

Die Erfindung betrifft einen Isolierschlauch, für eine Doppel-Rohrleitung nach dem Oberbegriff des Anspruchs 1.

Derartige Isolierschläuche kommen vor allem zur Isolierung von Heizungsrohren zum Einsatz, um zu verhindern, dass von den Heizungsrohren zu viel Wärme an die Umgebung abgegeben wird, bevor das Heizmittel in die Heizkörper gelangt. Bekannte Isolierschläuche bestehen beispielsweise aus einer Innenlage aus einem Polyesterschaumstoff und einer äußeren Lage aus einem Kunststoffvlies. Hierbei dient die Innenlage aus dem Schaumstoff zur Wärmeisolierung und die Außenlage aus dem Kunststoffvlies zur Erhöhung der Reißfestigkeit.

Das deutsche Gebrauchsmuster 94 20 319 zeigt einen umgekehrt aufgebauten Isolierschlauch, bei welchem das Kunststoffvlies die Innenseite und der Schaumstoff die Außenseite des Schlauches bildet. Hierdurch wird die Aufgabe gelöst, dass der Isolierschlauch auch für Rohrtemperaturen oberhalb 120°C geeignet ist, da die die Innenseite des Isolierschlauches bildende Schicht aus einem Kunststoffvlies erheblich höheren Temperaturen standhält als der Schaumstoff.

Ferner zeigt die DE 33 00 443 A1 ausgeschäumte Halbschalen mit einer festen Außenwand zur Rohrisolierung unter Verwendung von geschnittenen Schaumstoffsegmenten. Diese Druckschrift beschreibt auch die Verwendung einer Steinwollmatte zur Rohrisolierung.

Die DE-AS 2 003 222 zeigt ebenfalls einen Isolierschlauch für Rohre, beschreibt jedoch insbesondere dessen Umwindung mit einem Kunststoffband und stellt nicht auf das eigentliche Isoliermaterial ab. Eine feste, zweischalige Rohrisolierung ist Gegenstand der GB 2 214 261 A. Auch hier ist das isolierende Material Schaumstoff. Ferner beschreibt die DD 17 75 859 ein längsgeschlitztes Schaumstoffisolierrohr, dessen Isoliermaterial ebenfalls als Schaumstoffkörper ausgebildet ist.

Schließlich ist Gegenstand der DE 25 35 843 A1 ein Leitungsbauteil, welches mit mehreren Schichten isoliert ist, nämlich mit einer innenliegenden, hochtemperaturbeständigen Schutzschicht, die beispielsweise ein Kunststoffvlies ist und einer weiter außen liegenden Wärmedämmschicht aus Kunstschaum sowie einer ganz außen liegenden abschließenden Ummantelung in Gestalt einer Polyethylenfolie.

Die genannten Isolierschläuche, insbesondere der im deutschen Gebrauchsmuster 94 20 319 beschriebene Schlauch, weisen den Nachteil auf, dass zur Erreichung einer guten Wärmedämmung hohe Schlauchdicken erforderlich sind. Außerdem sind diese Schläuche insbesondere aufgrund des Schaumstoffes wenig flexibel und Rohrbögen können nicht mit dem gleichen Schlauchstück mit isoliert werden, sondern es sind eigene Winkelstücke erforderlich. Darüber hinaus enthalten die bei diesen Rohrisolierungen verwendeten Schaumstoffe häufig Fremdstoffe, z. B. Chloride, Nitride und Amoniak, welche Ausgasen und die Rohrleitungen angreifen können. Schließlich sind für verschiedene Anwendungsfälle verschieden Rohrisolierungen erforderlich, was eine hohe Lagerhaltung und damit hohe Kosten bedingt.

Die DE 10 2004 041 305 A1 beschreibt ein Verfahren zur Isolierung von Verdampferrohren bei einer Kraftfahrzeugklimaanlage, wobei als die Isolierung bildendes Isolationsmaterial ein Schaumstoffmaterial dient, welches mittels Heizelement-Schweißens befestigt wird. Die Druckschrift beschreibt die Umhüllung benachbarter Rohre mit einer einheitlichen Matte und die anschließende Verschweißung derselben an mehreren Stellen.

Gegenstand des Deutschen Patents DE 101 04 046 C1 ist ein verbesserter Isolierschlauch, welcher die Nachteile der oben genannten Isolierschläuche nicht aufweist und aus mindestens zwei Lagen besteht, wobei die der Rohrleitung zugewandte Lage aus einem ersten Kunststoffvlies besteht, welches als Polyesterfaservlies ausgebildet ist und eine weitere, von der Rohrleitung weiter abgewandte Lage aus einem zweiten Kunststoffvlies besteht, welches eine geringere Dichte als das erste Kunststoffvlies aufweist. Derartige Isolierschläuche haben sich sehr gut bewährt. Falls zwei Rohre nebeneinander herlaufen, also ein Doppelrohr bilden, müssen jedoch zwei derartige Isolierschläuche unabhängig voneinander verwendet werden, was relativ teuer ist, da man zwei Schlauchstücke benötigt und auch die Handhabung erschwert, weil jedes Rohrstück einzeln isoliert werden muss.

Es besteht daher die Aufgabe, einen Isolierschlauch so weiterzubilden, dass eine kostengünstige Herstellung und Verlegung auch bei Doppelrohr-Systemen möglich ist.

Gelöst wird diese Aufgabe mit den kennzeichnenden Merkmalen des Anspruchs 1. Vorteilhafte Ausgestaltungen sind den Unteransprüchen entnehmbar.

Ein Ausführungsbeispiel der Erfindung wird im Folgenden unter Bezugnahme auf die begleitende Zeichnung näher erläutert, welche einen Querschnitt durch eine Ausführungsform eines erfindungsgemäßen Isolierschlauches zeigt.

Der dargestellte Isolierschlauch 1 für eine aus zwei Rohren bestehende Doppel-Rohrleitung 2, beispielsweise bestehend aus Kunststoff-, Edelstahl- oder Kupferrohren, weist zwei Lagen auf, nämlich eine innere Lage aus einem ersten Kunststoffvlies 4 und einer äußeren Lage aus einem zweiten Kunststoffvlies 3. Bei beiden Kunststoffvliesen 4 und 3 handelt es sich um Polyesterfaservliese. Das erste Vlies 4 ist relativ dünn und weist beispielsweise eine Dicke von 3,5mm auf, während das zweite Vlies 3 demgegenüber dicker ist und eine Dicke von beispielsweise 15mm aufweist. Das erste Vlies 4 weist ein Flächengewicht von 400g/m² auf, während das zweite Vlies 3 ein Flächengewicht von nur 200g/m² aufweist. Daraus ergibt sich eine erheblich geringere Dichte der zweiten Schicht 3 gegenüber der ersten Schicht 4, da diese ja etwa viermal so dick ist und dennoch nur das halbe Flächengewicht aufweist (Dichtedifferenz um den Faktor 8). Das Kunststoffvlies 4 ist hochreißfest; beide Kunststoffvliese 3 und 4 weisen einen Schmelzpunkt von 256°C auf. Sie fallen unter die Baustoffklasse B1, also "schwerentflammbar".

Das zweite Kunststoffvlies 3 ist ein wattiertes Vlies und damit wesentlich weicher und besser verformbar als das erste Kunststoffvlies 4, welches komprimiert ist.

Die Anordnung aus erstem Kunststoffvlies 4 und dem zweitem Kunststoffvlies 3 ist mit einer Außenhaut 5 aus Kunststoff versehen. Diese Außenhaut ist als Folie ausgebildet, besteht aus einem Polyolefin oder einem Polyester und weist eine Dicke von 50-150 µm auf.

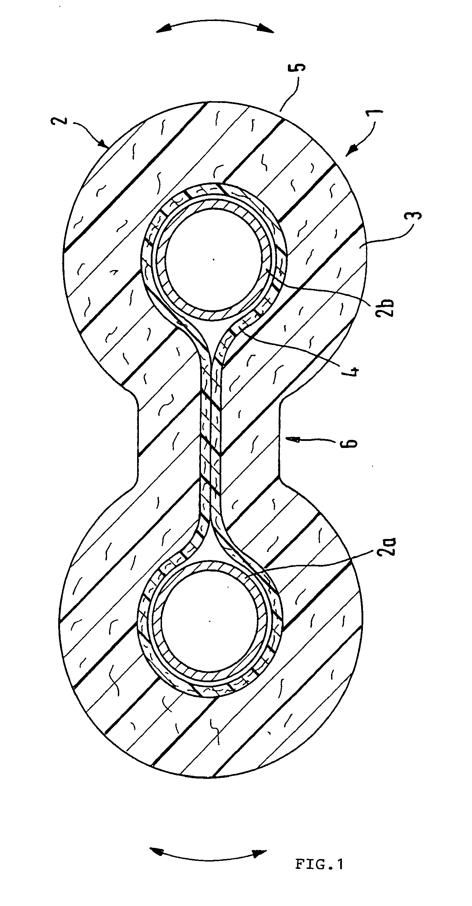

Der erfindungsgemäße Isolierschlauch weist, wie es in der Figur dargestellt ist, zur isolierenden Umhüllung der beiden parallel verlaufenden Rohre 2a und 2b eine Einschnürung 6 zwischen den beiden Rohren 2a und 2b auf, sodass sich die Innenseiten des Isolierschlauchs 1 zwischen den beiden Rohren 2a und 2b berühren. Genauer formuliert berühren sich zwei Bereiche des ersten Kunststoffvlieses 4. Die Einschnürung 6 ist so ausgebildet, dass die beiden Bereiche des ersten Kunststoffvlieses 4 an der Einschnürung 6 fest miteinander verbunden sind. Dies ist notwenig, um nicht nur eine Isolierung des Rohrsystems 2 von der Umgebung, sondern auch eine gegenseitige Isolierung der beiden Rohre 2a und 2b, welche beispielsweise Heiß- und Kaltwasser fördern können, zu erzielen.

Die feste Verbindung der beiden Bereiche des ersten Kunststoffvlieses 4 an der Stelle der Einschnürung 6 erfolgt beispielsweise durch eine Klebe- oder durch eine Schweißverbindung. Falls es sich um eine Klebeverbindung handelt, kommt beispielsweise der Einsatz von Sprühkleber oder eines doppelseitigen Klebebandes in Betracht. Falls es sich um eine Schweißverbindung handelt, kommt beispielsweise das Ultraschallverschweißen während der Herstellung des Isolierschlauches 1 in Betracht. Dies ist besonders vorteilhaft, da auf weitere Materialien verzichtet werden kann und der sich entlang des Isolierschlauches 1 bewegende Schweißkopf zu einem Aufschmelzen des Vliesstoffes des ersten Kunststoffvlieses 4 im Bereich der Einschnürung 6 und zu einer dauerhaften Verschweißung führt.

Der erfindungsgemäße Isolierschlauch weist gegenüber einem schaumstoffhaltigen Isolierschlauch erhebliche Vorteile auf. Es können damit geringe Dämmdicken produziert werden, die den Heizungsanlagenverordnungen entsprechen, da das zweite Kunststoffvlies 3 eine erheblich bessere Dämmung aufweist als der bislang verwendete Schaumstoff. Ferner ist der Isolierschlauch enorm flexibel, wodurch keine speziellen Winkelstücke für die Isolierung von Rohrbögen notwendig sind. Das Kunststoffvlies, und zwar sowohl die erste Schicht 4 als auch die zweite Schicht 3, lassen sich leicht um jeden beliebigen Winkel biegen. Der Isolierschlauch bietet auch eine erhebliche Zeit- und Kosteneinsparung für den Endverbraucher, und zwar durch die Tatsache der einfacheren Verlegbarkeit bei gebogenen Rohren. Diese Vorteile treten besonders in der beanspruchten Ausführung zur Isolierung von zwei Rohren zutage, da die Anordnung extrem flexibel ist und der Handwerker lediglich einen Schlauch verlegen muss, um zwei parallel verlaufende Rohre zu isolieren. Dies ergibt einen günstigeren Materialpreis, da ein Schlauch für zwei Rohre geeignet ist, und einen günstigeren Verlegepreis, da in einem Arbeitsgang zwei Rohre isoliert werden können.

Die Verwendung von zwei Kunststoffvliesen unterschiedlicher Dichte, insbesondere die Verwendung eines hochdichten und reißfesten Kunststoffvlieses für die unmittelbare Umkleidung des Rohres, bewirkt, dass das äußere, wattierte Vlies im unmontierten Zustand der Rohrisolierung, sich nicht in den das Rohr aufnehmenden Hohlraum ausbreitet und ausdehnt, sondern von dem inneren, dichten Kunststoffvlies 4 zurückgehalten wird. Aufgrund dieses inneren, relativ steifen und die Öffnung für das Rohr offenhaltenden Kunststoffvlieses 4 kann die erfindungsgemäße Rohrisolierung ohne weiteres über ein zu isolierendes Rohr geschoben werden, was bei einer Rohrisolierung, die nur aus einer Schicht wattierten Materials besteht nicht möglich ist, dass sich hier die wattierte Isolierschicht immer in den für das Rohr bestimmten Hohlraum ausbreitet. Die innere Kunststoffvliesschicht 4 ist damit gleichzeitig eine den Rohrdurchmesser offen haltende Gleitschicht für die Isolierung.

Die Körper- und Luftschallminderung ist durch die weiche Vliesschicht (zweites Kunststoffvlies 3) gegenüber Schaumstoff erheblich verbessert. Schließlich weisen die Kunststoffvliese keinerlei Verunreinigungen mit Chloriden, Nitriden, Amoniak oder weiteren chemischen Stoffen auf, welche Rohre angreifen könnten. Die Rohre werden also durch den erfindungsgemäßen Isolierschlauch nicht angegriffen und bleiben langzeitig erhalten. Damit ist der erfindungsgemäße Isolierschlauch für Rohrisolierungen im Bereich des Heizungsbaus, des Kältebaus und von Solaranlagen bestimmt. Da für die verschiedensten Anwendungen nur eine Form des Isolierschlauches nötig ist, reduzieren sich auch die Lagerprobleme im Großhandel und Handwerk und damit wiederum die Kosten.

## Patentansprüche

1. Isolierschlauch (1) für eine Rohrleitung (2) zur Rohrisolierung im Bereich des Heizungsbaus, des Kältebaus und von Solaranlagen, mit mindestens zwei Lagen, wobei die der Rohrleitung (2) zugewandte Lage aus einem ersten Kunststoffvlies (4) besteht, und eine weitere, von der Rohrleitung (2) weiter abgewandte Lage aus einem zweiten Kunststoffvlies (3) besteht, **dadurch gekennzeichnet, dass** der Isolierschlauch (1) zur isolierenden Umhüllung einer zwei parallel verlaufende Rohre (2a, 2b) umfassenden Doppel-Rohrleitung (2) zwischen den beiden Rohren (2a, 2b) eine Einschnürung aufweist, an welcher ein Bereich des ersten Kunststoffvlieses (4) einen anderen Bereich des ersten Kunststoffvlieses (4) berührt und mit diesem fest verbunden ist.

2. Isolierschlauch nach Anspruch 1, **dadurch gekennzeichnet, dass** die Verbindung der beiden Bereiche des ersten Kunststoffvlieses (4) eine Klebeverbindung, beispielsweise durch ein Klebeband oder einen Sprühkleber, ist.

3. Isolierschlauch nach Anspruch 1, **dadurch gekennzeichnet, dass** die Verbindung zwischen den beiden Bereichen des ersten Kunststoffvlieses (4) eine Schweißverbindung, insbesondere erzeugt durch Ultraschallverschweißen, ist.

4. Isolierschlauch nach einem der voranstehenden Ansprüche, **dadurch gekennzeichnet, dass** das erste Kunststoffvlies (4) ein Polyesterfaservlies mit einem Flächengewicht zwischen 300 und 500g/m² und einer Dicke zwischen 2 und 7 mm und das zweite Kunststoffvlies (3) ein Polyestervlies mit einem Flächengewicht zwischen 100 und 1000g/m² und einer Dicke zwischen 4 und 40 mm ist.

5. Isolierschlauch nach einem der voranstehenden Ansprüche, **dadurch gekennzeichnet, dass** mindestens das zweite Kunststoffvlies (3) wattiert ist und beide Kunststoffvliese (4, 3) schwer entflammbar sind.

6. Isolierschlauch nach einem der voranstehenden Ansprüche, **dadurch gekennzeichnet, dass** das erste Kunststoffvlies (4) mit dem zweiten Kunststoffvlies (3) mit Hilfe eines Schmelzklebers verklebt ist.

7. Isolierschlauch nach einem der voranstehenden Ansprüche, **dadurch gekennzeichnet, dass** er axial geschlitzt und die entstehenden Stoßkanten wieder miteinander verklebbar sind.

8. Isolierschlauch nach einem der voranstehenden Ansprüche, **dadurch gekennzeichnet, dass** an der Außenseite des zweiten Kunststoffvlieses (3) eine weitere Schicht als Außenhaut (5) vorgesehen ist.

9. Isolierschlauch nach Anspruch 8, **dadurch gekennzeichnet, dass** die Außenhaut (5) aus einer Kunststofffolie, beispielsweise aus einem Polyolefin oder eine Polyester, besteht und eine Dicke von 50 bis 150 µm aufweist.

10. Isolierschlauch nach einem der voranstehenden Ansprüche, **dadurch gekennzeichnet, dass** das zweite Kunststoffvlies (3) eine höchstens halb so große Dichte wie das erste Kunststoffvlies (4) aufweist.

## Claims

1. Insulating sleeve (1) for a pipe (2) for pipe insulation in the heating engineering, refrigeration engineering and solar installations sector, having at least two layers, the layer closest to the pipe (2) consisting of a first plastic non-woven fabric (4), and a further layer further away from the pipe (2) consisting of a second plastic non-woven fabric (3), **characterised in that** for insulating covering of a double pipe (2) comprising two pipes (2a, 2b) running parallel the insulating sleeve (1) exhibits a constriction between the two pipes (2a, 2b) at which an area of the first plastic non-woven fabric (4) touches another area of the first plastic non-woven fabric (4) and is joined securely to the latter.

2. Insulating sleeve according to claim 1, **characterised in that** the joint between the two areas of the first plastic non-woven fabric (1) is a glued joint, produced for example by means of an adhesive tape or a spray adhesive.

3. Insulating sleeve according to claim 1, **characterised in that** the joint between the two areas of the first plastic non-woven fabric (4) is a welded joint, produced in particular by ultrasound welding.

4. Insulating sleeve according to one of the preceding claims, **characterised in that** the first plastic non-woven fabric (4) is a polyester fibre non-woven fabric with a weight per unit area of between 300 and 500 g/m² and a thickness of between 2 and 7 mm and the second plastic non-woven fabric (3) is a polyester non-woven fabric with a weight per unit area of between 100 and 1000 g/m² and a thickness of between 4 and 40 mm.

5. Insulating sleeve according to one of the preceding claims, **characterised in that** at least the second plastic non-woven fabric (3) is lined with wadding and the two plastic non-woven fabrics (4, 3) are not readily inflammable.

6. Insulating sleeve according to one of the preceding claims, **characterised in that** the first plastic non-woven fabric (4) is glued to the second plastic non-woven fabric (3) with the aid of a hot melt adhesive.

7. Insulating sleeve according to one of the preceding claims, **characterised in that** it is slit axially and the resulting abutting edges can be glued together again.

8. Insulating sleeve according to one of the preceding claims, **characterised in that** a further layer is provided on the outside of the second plastic non-woven fabric (3) as external skin (5).

9. Insulating sleeve according to claim 8, **characterised in that** the external skin (5) consists of a plastic foil, in particular of a polyolefin or a polyester, and exhibits a thickness of from 50 to 150 µm.

10. Insulating sleeve according to one of the preceding claims, **characterised in that** the second plastic non-woven fabric (3) exhibits a density which is half that of the first plastic non-woven fabric (4).

## Revendications

1. Manche d'isolation (1) pour une conduite (2) destinée à l'isolation de tuyau dans le domaine de la construction d'appareils de chauffage, de la construction d'installations frigorifiques et d'installations solaires, avec au moins deux couches, sachant que la couche tournée vers la conduite (2) se compose d'un premier non-tissé en matière synthétique (4), et une autre couche davantage éloignée de la conduite (2) se compose d'un second non-tissé en matière synthétique (3), **caractérisée en ce que** la manche d'isolation (1) présente un rétrécissement pour l'enveloppe isolante d'une conduite double (2) comportant deux tubes (2a, 2b) s'étendant parallèlement entre les deux tubes (2a, 2b), sur lequel rétrécissement une zone du premier non-tissé en matière synthétique (4) touche une autre zone du premier non-tissé en matière synthétique (4) et est fixement reliée à celle-ci.

2. Manche d'isolation selon la revendication 1, **caractérisée en ce que** la liaison entre les deux zones du premier non-tissé en matière synthétique (4) est une liaison collée, par exemple par une bande adhésive ou une colle à pulvériser.

3. Manche d'isolation selon la revendication 1, **caractérisée en ce que** la liaison entre les deux zones du premier non-tissé (4) est une liaison par soudure, en particulier générée par soudure aux ultrasons.

4. Manche d'isolation selon l'une quelconque des revendications précédentes, **caractérisée en ce que** le premier non-tissé en matière synthétique (4) est un non-tissé en fibres de polyester avec un grammage compris entre 300 et 500 g/m² et une épaisseur comprise entre 2 et 7 mm et le second non-tissé en matière synthétique (3) est un non-tissé en polyester avec un grammage compris entre 100 et 1 000 g/m² et une épaisseur comprise entre 4 et 40 mm.

5. Manche d'isolation selon l'une quelconque des revendications précédentes, **caractérisée en ce qu'**au moins le second non-tissé en matière synthétique (3) est ouaté et les deux non-tissés en matière synthétique (4, 3) sont difficilement inflammables.

6. Manche d'isolation selon l'une quelconque des revendications précédentes, **caractérisée en ce que** le premier non-tissé en matière synthétique (4) est collé au second non-tissé en matière synthétique (3) par une colle fusible.

7. Manche d'isolation selon l'une quelconque des revendications précédentes, **caractérisée en ce qu'**elle est fendue dans le sens axial et les rebords apparus peuvent être de nouveau collés ensemble.

8. Manche d'isolation selon l'une quelconque des revendications précédentes, **caractérisée en ce qu'**une autre couche est prévue en guise de peau extérieure (5) sur le côté extérieur du second non-tissé en matière synthétique (3).

9. Manche d'isolation selon la revendication 8, **caractérisée en ce que** la peau extérieure (5) se compose d'un film synthétique, par exemple d'une polyoléfine ou d'un polyester et présente une épaisseur comprise entre 50 et 150 µm.

10. Manche d'isolation selon l'une quelconque des revendications précédentes, **caractérisée en ce que** le second non-tissé en matière synthétique (3) présente une épaisseur au maximum moitié moins grande que celle du premier non-tissé en matière synthétique (4).
